# EUROPEAN PATENT SPECIFICATION

(11) **EP 2 152 136 B1**
(45) Date of publication and mention of the grant of the patent: **31.07.2013**
(21) Application number: 08723494.4
(22) Date of filing: 14.03.2008
(51) Int. Cl.: A47L 9/28

(54) **VACUUM CLEANER**
STAUBSAUGER
ASPIRATEUR

(30) Priority: 07.05.2007 KR 20070043973; 14.11.2007 KR 20070116317; 14.11.2007 KR 20070116318
(43) Date of publication of application: 17.02.2010
(73) Proprietor: LG Electronics Inc., Seoul 150-721 (KR)
(72) Inventor: JEONG, Kyeong-Seon, Changwon City Gyeongsangnam-do 641-711 (KR); MIN, Ju-Young, Gyeongnam-do 641-711 (KR); CHONG, Chung-Ook, Gyeongnam-do 641-711 (KR); SUN, Chang-Hwa, Gyeongnam-do 641-711 (KR); HWANG, Geun-Bae, Gyeongnam-do 641-711 (KR); CHOI, Kyu-Chun, Ulsan 681-749 (KR); LEE, Sang-In, Gyeongnam-do 641-711 (KR); PARK, Chang-Do, Gyeongnam-do 641-711 (KR); LEE, Chang-Ook, Gyeongnam-do 641-711 (KR); LIM, Seung-Heun, Gyeongnam-do 641-711 (KR)
(74) Representative: Urner, Peter
(86) International application number: PCT/KR2008/001457
(87) International publication number: WO 2008/136575

(56) References cited:
- EP-A1- 0 572 930
- DE-B3-102006 008 556
- JP-A- 3 090 120
- JP-A- 4 189 332
- JP-A- 03 090 120
- JP-A- 04 189 332

## Description

### TECHNICAL FIELD

The present disclosure relates to a vacuum cleaner.

### BACKGROUND ART

In general, a vacuum cleaner is an apparatus that uses suctioning force imparted by a suction motor installed in the main body to suction air including dust and filter the dust within the main body.

Such a vacuum cleaners can largely be divided into canister vacuum cleaners that have a suctioning nozzle, for suctioning air including dust, that is provided separately from and connected through a connecting mechanism to a main body, and upright vacuum cleaners that have a suctioning nozzle formed integrally with the main body.

With a canister vacuum cleaner, cleaning is performed by moving the suctioning nozzle forward and backward or laterally without moving the main body, and with an upright vacuum cleaner, the main body moves simultaneously with the suctioning nozzle to perform cleaning.

JP 03090120 A discloses a vacuum cleaner having driven wheels and a sensing mechanism which drives the wheels depending on the angle between the suction hose and the vacuum cleaner main body.

DE 10 2006 008 556 B3 discloses a vacuum cleaner which is also adapted to drive a powered wheel drive depending on a movement of the suction hose connector on the cleaner main body.

EP 0 572 930 A1 discloses a vacuum cleaner with driven wheels which can move in a forward and rearward direction.

JP 04189332 A discloses a vacuum cleaner having driven wheels with a driving motor which is driven for a predetermined time.

### DISCLOSURE OF INVENTION

### TECHNICAL PROBLEM

An object of the present disclosure is to provide a vacuum cleaner with a main body that can automatically move by means of a driving unit.

Another object of the present disclosure is to provide a vacuum cleaner capable of moving the vacuum cleaner main body in a direction in which a user performs cleaning, to facilitate cleaning by user.

A further object of the present disclosure is to provide a vacuum cleaner with a main body capable of easily moving over obstacles on a floor.

### TECHNICAL SOLUTION

The first object of the present invention is achieved by a vacuum cleaner with the features of claim 1.

This vacuum cleaner comprises a vacuum cleaner main body; a wheel enabling movement of the vacuum cleaner main body; a driving unit driving the wheel; a sectioning apparatus through which air suctioned from a surface to be cleaned moves to the vacuum cleaner main body; a sensor for sensing movement of the suctioning apparatus; and a controller controlling an operation of the driving unit according to data sensed by the sensor. The suctioning apparatus comprises a connector coupled to the vacuum cleaner main body, and the sensor senses movement of the connector. A moving member is provided on the vacuum cleaner main body and coupled to the connector, for moving together with the connector and the moving member moves repetitively forward and rearward together with the connector.

In one embodiment, a vacuum cleaner includes: a vacuum cleaner main body; a wheel enabling movement of the vacuum cleaner main body; a driving unit driving the wheel; a suctioning apparatus through which air suctioned from a surface to be cleaned moves to the vacuum cleaner main body; a sensor for sensing movement of the suctioning apparatus; and a controller controlling an operation of the driving unit according to data sensed by the sensor.

In another embodiment, a vacuum cleaner includes: a vacuum cleaner main body; a wheel enabling movement of the vacuum cleaner main body; a driving unit for driving the wheel; a suctioning apparatus through which air suctioned from a surface to be cleaned moves to the vacuum cleaner main body; a connector connecting the suctioning apparatus to the vacuum cleaner main body, the connector capable of repetitive movement with respect to the vacuum cleaner main body; a sensor unit for sensing movement of the connector; and a controller for controlling an operation of the driving unit according to data sensed by the sensor unit.

In a further embodiment, a vacuum cleaner includes: a vacuum cleaner main body; a wheel enabling movement of the vacuum cleaner main body; a driving unit driving the wheel; a suctioning apparatus through which air suctioned from a surface to be cleaned moves to the vacuum cleaner main body; a moving member connected to the suctioning apparatus, and rotatably provided on the vacuum cleaner main body; a sensor for sensing a rotation of the moving member; and a controller for controlling an operation of the driving unit according to data sensed by the sensor.

### Advantageous Effects

An advantage according to embodiments of the present disclosure is that because a vacuum cleaner main body can autonomously move in relation to the movement of a suctioning apparatus, a user does not have to exert force to move the vacuum cleaner main body.

Also, because a vacuum cleaner main body can autonomously move in a direction in which a user is cleaning, the user can more easily perform cleaning while moving over surfaces to be cleaned.

Additionally, because a vacuum cleaner main body can be moved by a driving unit, the vacuum cleaner main body can move more easily over obstacles on a floor.

### Brief Description of the Drawings

Fig. 1 is a perspective view of a vacuum cleaner according to a first embodiment of the present disclosure.

Fig. 2 is a side view of a vacuum cleaner main body showing a movement sensing unit according to the first embodiment.

Fig. 3 is a perspective view of a movement sensing unit according to the first embodiment.

Fig. 4 is a sectional view of Fig. 3 taken along line A-A.

Fig. 5 is a block diagram showing the configuration of a vacuum cleaner according to the first embodiment.

Fig. 6 is a perspective view showing a movement sensing unit operating according to the first embodiment.

Fig. 7 is a side view of a vacuum cleaner main body showing a movement sensing unit according to a second embodiment of the present disclosure.

Fig. 8 is perspective view of a movement sensing unit according to the second embodiment.

Fig. 9 is an exploded perspective view of a movement sensing unit according to the second embodiment.

Fig. 10 is a sectional view of Fig. 8 taken along line B-B.

Fig. 11 is a block diagram showing the configuration of a vacuum cleaner according to the second embodiment.

Fig. 12 is a perspective view showing a movement sensing unit operating according to the second embodiment.

Fig. 13 is a perspective view of a vacuum cleaner according to a third embodiment of the present disclosure.

Fig. 14 is a sectional view of Fig. 13 taken along line C-C.

Fig. 15 is a block diagram showing the configuration of a vacuum cleaner according to the third embodiment.

Fig. 16 is a side view showing a vacuum cleaner in a standby state according to the third embodiment.

Fig. 17 is a side view showing a vacuum cleaner operating according to the third embodiment.

Fig. 18 is a side view showing a vacuum cleaner operating according to the third embodiment.

Fig. 19 is a perspective view of a vacuum cleaner according to a fourth embodiment of the present disclosure.

### Mode for the Invention

Below, detailed descriptions of embodiments according to the present disclosure will be provided with reference to the drawings.

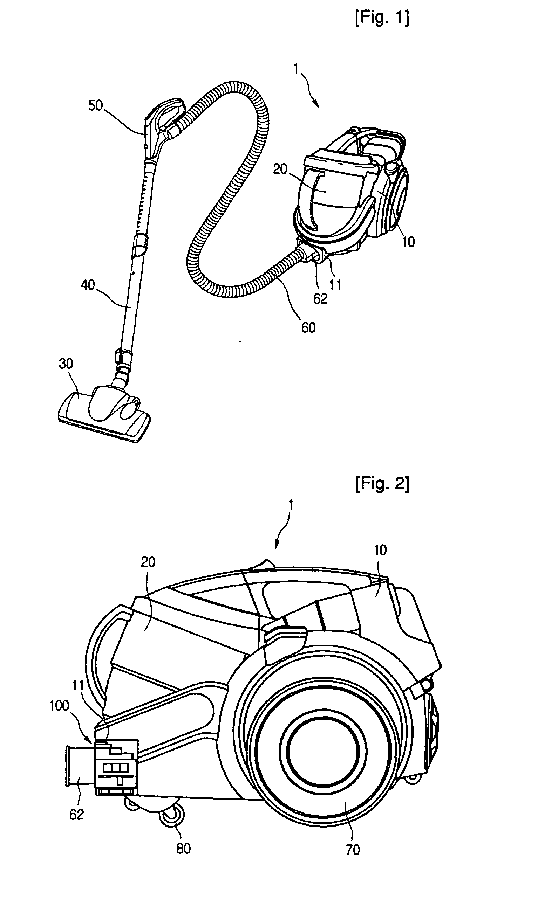

Fig. 1 is a perspective view of a vacuum cleaner according to a first embodiment of the present disclosure.

Referring to Fig. 1, a vacuum cleaner 1 according to the present embodiment includes a vacuum cleaner main body 10 provided with a suction motor (not shown) within for generating suctioning force, a dust separating apparatus 20 for separating dust included in air suctioned into the vacuum cleaner main body 10, and a suctioning apparatus through which air including dust from a surface to be cleaned is suctioned, and which directs suctioned air into the vacuum cleaner main body 10.

The suctioning apparatus includes a suctioning nozzle 30 that suctions air including dust, an extension tube 40 that can be varied in length and is connected to the suctioning nozzle 30, a handle 50 connected to the extension tube for a user to grasp, and a connecting hose 60 connecting the handle 50 to the vacuum cleaner main body.

In detail, a connector 62 provided on the connecting hose 60 is connected to an air inlet 11, through which air including dust is suctioned, and which is formed at the front, lower portion of the vacuum cleaner main body 10.

In the above configuration, a brief description of the operation of the vacuum cleaner 1 will be given. First, when power is applied to the vacuum cleaner 1, the suction motor provided in the vacuum cleaner main body 10 generates suctioning force. Air including dust that is suctioned through the suctioning nozzle 30 by means of the suctioning force passes through the extension tube 40, the handle 50, and the connecting hose 60, and flows into the vacuum cleaner main body 10. The air that flows to the vacuum cleaner main body 10 undergoes a dust filtering process in the dust separating apparatus 20. The separated dust is stored in the dust separating apparatus 20, and the separated air flows through the vacuum cleaner main body 10 and is discharged to the outside of the vacuum cleaner main body.

Fig. 2 is a side view of a vacuum cleaner main body showing a movement sensing unit according to the first embodiment. Fig. 2 is a side view of the vacuum cleaner with a portion of the air inlet cut away.

Referring to Fig. 2, a pair of main wheels 70 is provided, one on either side of the vacuum cleaner main body 10, to allow the vacuum cleaner main body 10 to move. An auxiliary wheel 80 is provided on the undersurface of the vacuum cleaner main body 10 to allow the vacuum cleaner main body 10 to be stably moved.

A movement sensing unit 100 is provided within the air inlet 11 of the vacuum cleaner main body 10 at the portion where the connector 62 of the connecting hose 60 is connected. The movement sensing unit 100 senses translation movement of the connector 62.

Below, a detailed description of the movement sensing unit will be provided.

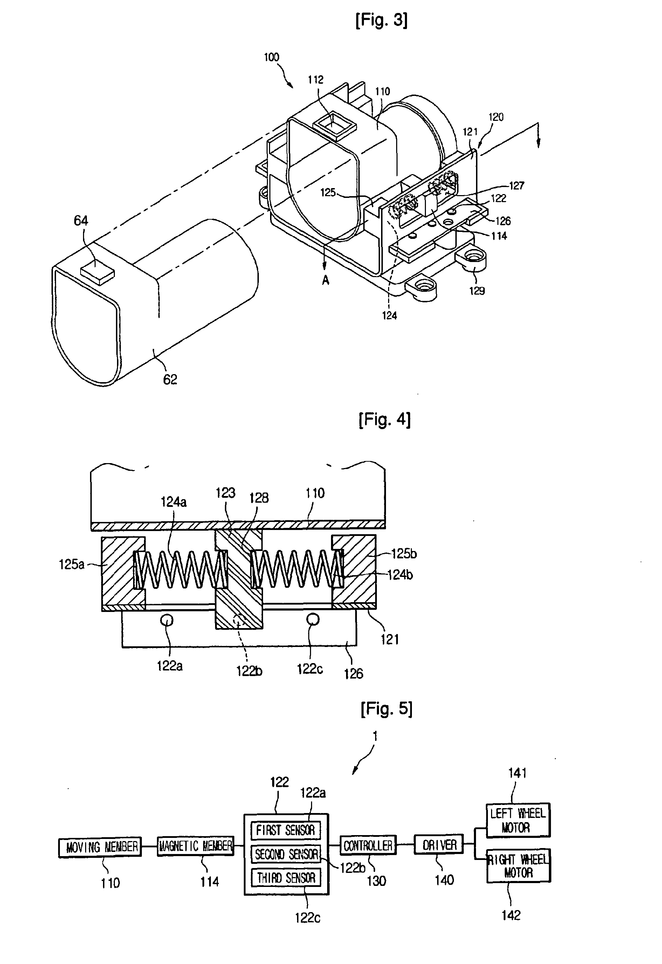

Fig. 3 is a perspective view of a movement sensing unit according to the first embodiment, and Fig. 4 is a sectional view of Fig. 3 taken along line A-A.

Referring to Figs. 3 and 4, a movement sensing unit 100 according to the present embodiment includes a moving member 110 to which the connector 62 is connected and capable of translation movement while having the connector connected thereto, and a guide unit 120 for guiding the movement of the moving member 110.

In detail, the connector 62 is formed in a shape corresponding to the moving member 110 and is inserted in the moving member 110. The connector 62 includes a first coupler 64 protruding therefrom to couple to the moving member 110. A second coupler 112 is formed on the moving member 110 to couple to the first coupler 64 when the connector 62 is inserted in the moving member 110. The second coupler 112 is a hole formed through the moving member.

The moving member 110 is provided with a magnetic member 114 having magnetism. The magnetic member 114 passes through a body 121 of the guide unit 120. The magnetic member 114 is either formed integrally with or is coupled to the moving member 110.

The guide unit 120 is fixed within the air inlet 11. The guide unit 120 supports the moving member 110.

The guide unit 120 includes a body 121, a sensor mount 126 extending to the side of the body 121, a sensor unit 122 mounted on the sensor mount 126 to sense movement of the magnetic member 114, a pair of elastic members 124a and 124b supporting both sides of the magnetic member 114 to allow the magnetic member 114 to move elastically, and a main body coupler 129 to couple to the air inlet 129.

Specifically, the body 121 has a pair of supports 125a and 125b formed thereon to support the pair of elastic members 124a and 124b. The pair of supports 125a and 125b includes a first support 125a and a second support 125b formed a distance apart from the first support 125a.

The pair of elastic members 124a and 124b includes a first elastic member 124a supported at a side of the first support 125a and the magnetic member 123, and a second elastic member 124b supported at a side of the second support 125b and the other side of the magnetic member 114.

Mounting recesses 128 are formed in either side of the magnetic member 114 and a respective side of the supports 125a and 125b, to secure the respective elastic members 124a and 124b therein.

An opening 127 is formed in a side of the body 121, through which the magnetic member 114 passes. The opening 127 is formed to elongatedly extend from front to rear. With the magnetic member 114 passed therethrough, the opening 127 guides the front-to-rear movement of the magnetic member 114. Therefore, the opening 127 may be referred to as a guide.

The sensor unit 122 is disposed below the magnetic member 114 with the magnetic member 114 passed through the opening 127. The sensor unit 122 includes a plurality of sensors 122a, 122b, and 122c. The sensors 122a, 122b, and 122c are disposed at predetermined intervals along the direction in which the magnetic member 114 moves.

Conversely, the sensor unit 122 may be disposed above the magnetic member 114, or may be disposed at the side of the magnetic member 114.

The plurality of sensors 122a, 122b, and 122c may be a Hall sensor for easily sensing magnetic fields formed by the magnetic member 114. Here, a Hall sensor is a type of transistor that senses magnetic fields, and is advantageous in that it is characterized by high sensitivity to magnetic field intensity and flux.

The sensor unit 122, as shown in Fig. 4, includes a first sensor 122a, a second sensor 122b, and a third sensor 122c disposed in-line along the moving direction of the magnetic member 114.

In detail, when external force is not imparted on the moving member 110 so that the moving member 110 is stationary, the magnetic member 123 is disposed at the second sensor 122b. Accordingly, the second sensor 122b senses the magnetic field of the magnetic member 114.

Conversely, if a pulling force is exerted on the moving member 110 so that the moving member 110 is moved forward, the first sensor 122a senses the magnetic field of the magnetic member 114. On the other hand, if a pushing force is exerted on the moving member 110 so that the moving member 110 is moved rearward, the third sensor 122c senses the magnetic field of the magnetic member 123.

According to which of the three sensors senses the magnetic field, the operation of a driving unit (described below) for rotating the main wheels 70 is altered.

Fig. 5 is a block diagram showing the configuration of a vacuum cleaner according to the first embodiment.

Referring to Fig. 5, a vacuum cleaner according to the present embodiment includes a moving member 110 connected to the connector 62 of the connecting hose to move forward and rearward together with the connector 62, a magnetic member 114 moving integrally with the moving member 110, a sensor unit 122 for sensing the magnetic field of the magnetic member 114, a driving unit 140 for driving the main wheels 70, and a controller 130 for controlling the operation of the driving unit 140 according to data sensed by the sensor unit 122.

In detail, the pair of main wheels includes a left wheel and a right wheel. The driving unit 140 includes a left wheel motor 141 for rotating the left wheel, and a right wheel motor 142 for rotating the right wheel. However, a single motor may be provided if there is no need to change the lateral direction of the vacuum cleaner main body 10, and only forward and rearward movement thereof is required.

The sensor unit 122 includes the above-described three sensors 122a, 122b, and 122c.

When the first sensor 122a senses the magnetic field of the magnetic member 114, the controller 130 controls the operation of the driving unit 140 to move the vacuum cleaner main body 10 forward.

When the second sensor 122b senses the magnetic field of the magnetic member 114, the controller 130 controls the driving unit 140 to stop.

When the third sensor 122c senses the magnetic field of the magnetic member 114, the controller 130 controls the operation of the driving unit 140 to move the vacuum cleaner main body 10 rearward.

Below, the operation of the vacuum cleaner will be described.

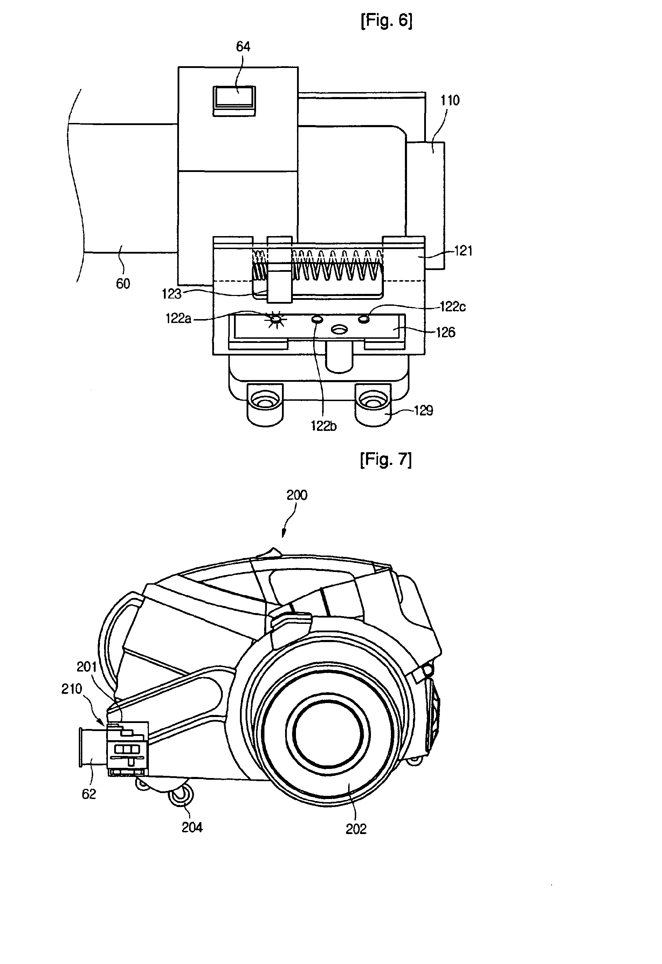

Fig. 6 is a perspective view showing a movement sensing unit operating according to the first embodiment. Fig. 6 exemplarily shows a moving member moving in a forward direction.

Referring to Figs. 1 to 6, a user grasps the handle 50 and performs cleaning of a floor surface by moving the suctioning nozzle 30. Here, while areas other than a floor surface may be cleaned, the present embodiment exemplarily describes the cleaning of a floor surface using the suctioning nozzle 30.

Here, before cleaning is performed, because force is not imparted on the moving member 110, the elasticity of each of the elastic members 124a and 124b is unbiased, and the magnetic member 114 is disposed above the second sensor 122b. Thus, the second sensor 122b senses the magnetic field of the magnetic member 114, and the driving unit 140 remains still.

When a user moves the suctioning nozzle 30 forward or backward to perform cleaning and such motion is repeated, the suctioning nozzle 30 actually progresses slightly forward.

In this cleaning process, when the suctioning nozzle 30 is moved forward, the connecting hose 60 is resultantly pulled forward. Then, the moving member 110 coupled with the connector 62 of the connecting hose 60 is moved forward. When the moving member 110 is moved forward, the first elastic member 124a is compressed, and the second elastic member 124b is extended.

When the moving member 110 moves forward, the magnetic member 114 is also moved forward to a position above the first sensor 122a. Then, the first sensor 122a senses the magnetic field of the magnetic member 114.

Here, when the moving member 110 is moved forward, this signifies that the vacuum cleaner main body 10 is being pulled forward, so that the vacuum cleaner main body 10 may be moved forward.

Accordingly, the controller 130 controls the driving unit 140 to rotate the main wheels 70 in directions to move the vacuum cleaner main body 10 forward. Thus, the vacuum cleaner main body is moved forward.

During the process in which the vacuum cleaner main body 10 is moved forward, if the biasing force of the first elastic member 124a becomes greater than the pulling force on the moving member 110, the moving member 110 moves rearward.

Here, when the biasing force of the first elastic member 124a becomes greater than the pulling force on the moving member 110, this signifies that the forward movement of the suctioning nozzle 30 has either been ceased or that the forward speed of the vacuum cleaner main body 10 has exceeded the forward speed of the suctioning nozzle 30.

When the moving member 110 thus moves rearward, the second sensor 122b senses the magnetic field of the magnetic member 114. Then, the controller 130 stops the operation of the driving unit 140.

Here, during the rearward movement of the moving member 110, if the magnetic member 114 is disposed between the first sensor 122a and the second sensor 122b, the first sensor 122a and the second sensor 122b may not be able to sense the magnetic field of the magnetic member 114. In this case, the controller 130 controls the operation of the driving unit 140 according to the most recent data sensed by a sensor on the magnetic field of the magnetic member 114. For example, from the point after the first sensor 122a senses the magnetic field of the magnetic member 114 until before the second sensor 122b senses the magnetic field of the magnetic member 114, the controller 130 controls the driving unit 140 to rotate the main wheels in directions to move the vacuum cleaner main body 10 forward.

If a user moves the suctioning nozzle 30 rearward, pushing force is exerted on the moving member 110 by the connector 62 of the connecting hose 60. Then, the moving member 110 is moved rearward. Thus, the second elastic member 124b is compressed, and the first elastic member 124a is extended.

When the moving member 110 moves rearward, the magnetic member 114 is also moved rearward to a position above the third sensor 122c. Then, the third sensor 122c senses the magnetic field of the magnetic member 114.

Accordingly, the controller 130 controls the driving unit 140 to rotate the main wheels 70 in directions to move the vacuum cleaner main body 10 rearward.

During the process in which the vacuum cleaner main body 10 is moved rearward, if the biasing force of the second elastic member 124b becomes greater than the pushing force on the moving member 110, the moving member 110 moves forward.

Here, when the biasing force of the second elastic member 124b becomes greater than the pushing force on the moving member 110, this signifies that the rearward movement of the suctioning nozzle 30 has either been ceased or that the rearward speed of the vacuum cleaner main body 10 has exceeded the rearward speed of the suctioning nozzle 30.

In the present embodiment, because the connector 62 of the connecting hose 60 remains fixed to the moving member 110, the forward or rearward moving direction of the moving member 110 is parallel to a central axis of the connector 62.

According to this embodiment, because a vacuum cleaner main body is able to autonomously move in accordance with the movement of a moving member, a user does not need to exert force to move the vacuum cleaner main body.

Also, because the vacuum cleaner main body can move in a direction in which the user performs cleaning, the user can move over surfaces to be cleaned to perform cleaning more easily.

Further, because the vacuum cleaner main body can be moved through the driving unit, the vacuum cleaner main body can easily move over obstacles on a floor.

Fig. 7 is a side view of a vacuum cleaner main body showing a movement sensing unit according to a second embodiment of the present disclosure.

The present embodiment is the same as the first embodiment in all aspects except for a difference in the configuration of a movement sensing unit for sensing movement of a connecting hose. Therefore, description will be provided of only aspects of the present embodiment that are characteristically different.

Fig. 7 is a side view of a vacuum cleaner main body showing a portion of an air inlet cutaway.

Referring to Fig. 7, a pair of main wheels 202 is provided, one on either side of a vacuum cleaner main body 200, to move the vacuum cleaner main body 200. An auxiliary wheel 204 is provided on the undersurface of the vacuum cleaner main body 200 to allow the vacuum cleaner main body 200 to be stably moved.

An air inlet 201 is defined in the front, lower portion of the vacuum cleaner main body 200. A movement sensing unit 210, coupled to the connector 62 of the connecting hose 60, is provided within the air inlet 201. The movement sensing unit 210 senses rotation of the connector 62.

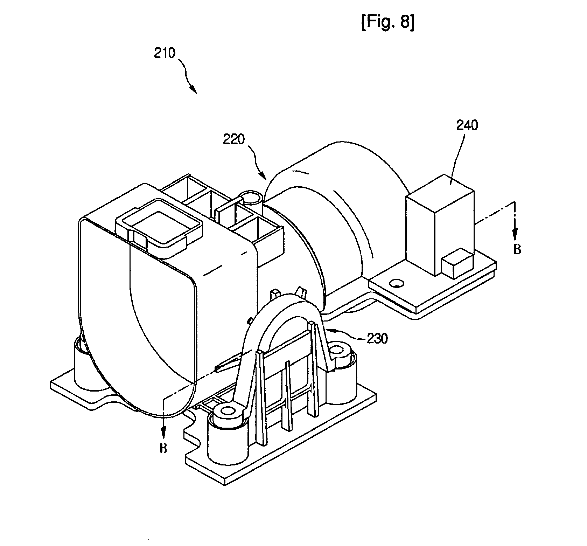

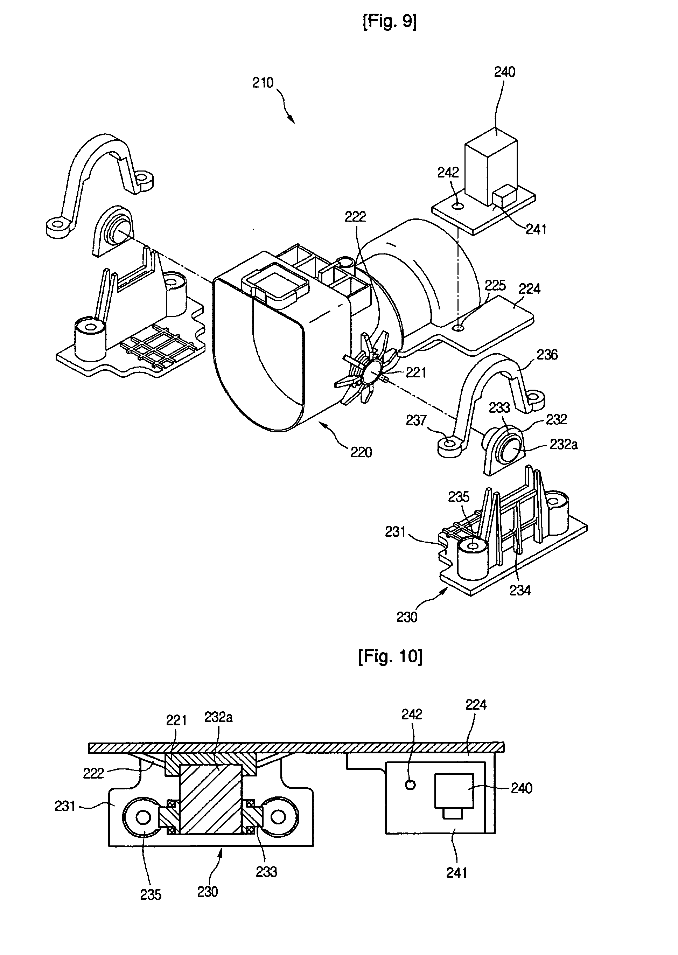

Fig. 8 is perspective view of a movement sensing unit according to the second embodiment, Fig. 9 is an exploded perspective view of a movement sensing unit according to the second embodiment, and Fig. 10 is a sectional view of Fig. 8 taken along line B-B.

Referring to Figs. 8 to 10, a movement sensing unit 210 according to the present embodiment includes a moving member 220 having the connector 62 connected thereto and capable of rotating with the connector 62 connected, and a guide unit 230 for guiding the rotation of the moving member 220.

In detail, the guide unit 230 includes a base 231, a guide member 232 provided with a rotating shaft 232a coupled to the moving member 220, a support 234 formed to extend upward from the base 231 to support the guide member 232, and a coupling member 236 coupled to the support 234 with the guide member 232 mounted on the support 234.

A bearing 113 is provided on the guide member 232 to allow the rotating shaft 232a to easily rotate. With the guide member 232 mounted on the support 234, the rotating shaft 232a rotates with respect to the guide member 232.

The support 234 is provided with a first fastening guide 235 for coupling with the coupling member 236, and a second fastening guide 237 is provided on the coupling member 236 to couple to the first fastening guide 235 by means of a screw.

The moving member 210 has a shaft coupler 221 formed thereon for coupling the rotating shaft 232a. A plurality of reinforcing ribs 222 is formed around the shaft coupler 221 to reinforce the latter. Here, the rotating shaft 232a may be coupled to the shaft coupler 221 through press fitting, or may be coupled using a separate coupling structure.

Here, while Fig. 9 shows the rotating shaft 232a formed cylindrically, when the rotating shaft 232a and the shaft coupler 221 are coupled through press fitting, a portion of the outer periphery of the rotating shaft and the inner periphery of the shaft coupler 221 may be formed in a non-circular shape - i.e., in a multi-angular shape - to allow the rotating shaft 232a and the shaft coupler 221 to rotate in concert.

The coupling structure, may, for example, include a protrusion formed on one of the rotating shaft 232a and the shaft coupler 221, and a recess formed in the other to receive the protrusion.

An angle sensor 240 is provided on the moving member 220 to sense the rotated angle of the moving member 220. A mount 241 is provided at the bottom of the angle sensor 240 to mount the angle sensor 240. A support 224 is formed on the moving member 220 to support the mount 241. With the mount 241 mounted on the support 224, in order to couple the two pieces with screws, fastening holes 224 and 242 are formed respectively in the support 224 and the mount 241.

Accordingly, the angle sensor 240 rotates in concert when the moving member 220 rotates, to thus sense the rotated angle of the moving member 220.

Here, in order for the moving member 220 to rotate within the air inlet 201, the vertical width of the air inlet 201 may be formed larger than the vertical height of the moving member 220.

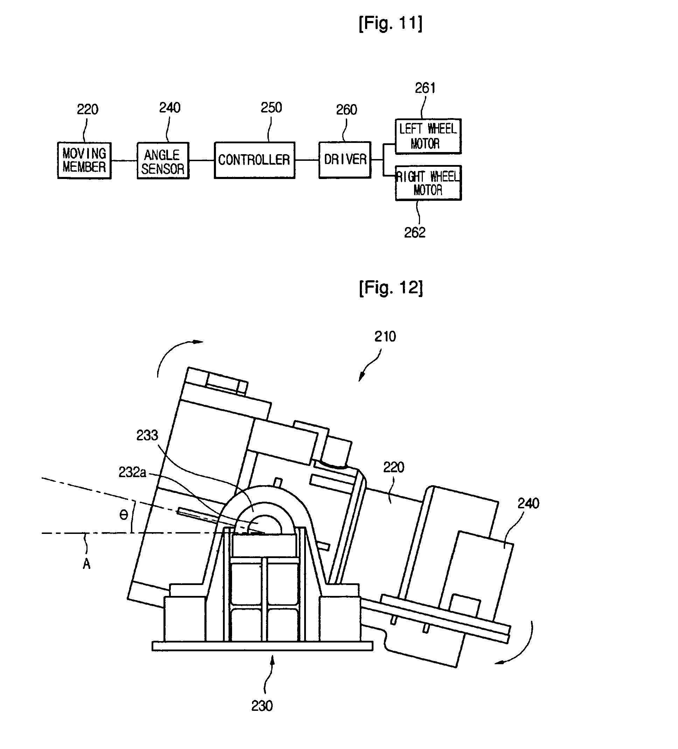

Fig. 11 is a block diagram showing the configuration of a vacuum cleaner according to the second embodiment.

Referring to Fig. 11, a vacuum cleaner according to the present embodiment includes a moving member 220 connected to the connector 62 of the connecting hose and rotating together with the connector 62, an angle sensor 240 for sensing the rotated angle of the moving member 220, a driving unit 260 for driving main wheels 202, and a controller 250 for controlling the operation of the driving unit 260 according to data sensed by the angle sensor 240.

In detail, the pair of main wheels includes a left wheel and a right wheel. The driving unit 260 includes a left wheel motor 261 for rotating the left wheel, and a right wheel motor 262 for rotating the right wheel.

When upward rotation of the moving member 220 is sensed by the angle sensor 240, the controller 250 controls the operation of the driving unit 260 to move the vacuum cleaner main body 200 forward.

When downward rotation of the moving member 220 is sensed by the angle sensor 240, the controller 250 controls the operation of the driving unit 260 to move the vacuum cleaner main body 200 rearward.

Below, the operation of the vacuum cleaner will be described.

Fig. 12 is a perspective view showing a movement sensing unit operating according to the second embodiment. Fig. 12 exemplarily shows the moving member rotated upward.

To describe the rotated direction of the moving member, when the moving member 220 is rotated upward, this signifies that the front end of the moving member 220 is rotated upward with respect to a reference line (A). Conversely, when the moving member 220 is rotated downward, this signifies that the front end of the moving member 220 is rotated downward with respect to the reference line (A). Here, reference line (A) may or may not be parallel with the floor surface. That is, the reference line (A) may be different according to the centers of gravity and rotation of the moving member 220. However, in the present embodiment, the reference line (A) is exemplarily described as being parallel to the floor surface.

Referring to Figs. 7 to 12, with the vacuum cleaner main body 200 in a stopped state, the moving member 220 maintains a parallel disposition to the floor surface. Here, of course, the handle is disposed higher than the moving member.

In this state, a user can use the handle 50 to move the suctioning nozzle 30 forward. Then, a pulling force is imparted on the connecting hose 60, and the pulling force is transferred to the moving member 220.

Thus, when a pulling force is imparted on the moving member 220 from a position higher than the moving member 220, the moving member 220 is rotated upward (or clockwise in Fig. 12). The angle sensor 240 rotates together with the moving member 220. The angle sensed by the angle sensor 240 is relayed to the controller 250.

Here, when the suctioning nozzle 30 is moved forward or backward or laterally, the connecting hose 60 is undulated, so that moving member 220 may be angled slightly upward or downward. In this case, the angle sensor 240 senses the tilt of the moving member 220, and the vacuum cleaner main body 200 can be continually moved forward and backward.

Therefore, when the angle sensed by the angle sensor 240 lies within a predetermined range with respect to the reference line (A), the controller 250 may disregard the sensed angles and may maintain the respective motors 261 and 262 in a inoperative state. Below, the disregarded range will be described as a "disregarded angle".

That is, the controller 250 may only drive the respective motors 261 and 262 in cases where a valid angle outside of the disregarded angle is sensed.

When a valid angle is sensed, the controller 250 controls the driving unit 260 to rotate the main wheels 202 to move the vacuum cleaner main body 200 forward. Thus, the vacuum cleaner main body moves forward.

When the vacuum cleaner main body 200 is moved forward, the connecting hose 60 becomes relaxed, and the angle sensed by the angle sensor 240 is reduced, whereupon if the new angle sensed by the angle sensor 240 lies within the disregarded angle range, the controller 250 stops operation of the driving unit 260.

When a user moves the suctioning nozzle 30 rearward, a pushing force is imparted on the connecting hose 60, and the pushing force is transferred to the moving member 220.

Here, when a slight force is transferred to the moving member 220 from a position above the moving member 220, the moving member rotates downward (or counterclockwise in Fig. 12). The angle sensor 240 rotates together with the moving member 220. The angle sensed by the angle sensor 240 is relayed to the controller 250.

When the angle sensed is a valid angle, the controller 250 controls the operation of the driving unit 260 to rotate the main wheels 202 so that the vacuum cleaner main body 200 moves rearward. Thus, the vacuum cleaner main body 200 is moved rearward.

In the present embodiment, the connector 62 of the connecting hose 60 maintains a fixed state to the moving member 220, and thus, rotation of the moving member 220 signifies that the axis of the connector 62 is rotated.

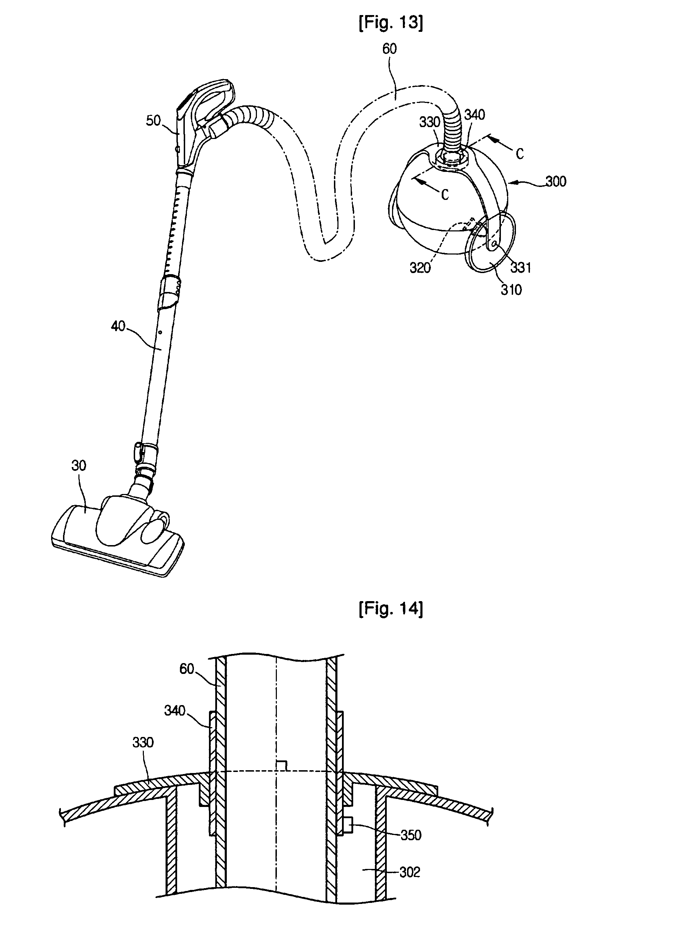

Fig. 13 is a perspective view of a vacuum cleaner according to a third embodiment of the present disclosure, and Fig. 14 is a sectional view of Fig. 13 taken along line C-C.

Referring to Figs. 13 and 14, a vacuum cleaner according to the present embodiment includes a vacuum cleaner main body 300, and a suctioning apparatus that suctions air including dust and transfers the same to the vacuum cleaner main body.

The suctioning apparatus includes a suctioning nozzle 30 for suctioning air including dust, a handle 50 that allows a user to manipulate the operation of the vacuum cleaner, an extension tube 40 connecting the suctioning nozzle 30 to the handle 50, and a connecting hose 60 connecting the handle 50 and the vacuum cleaner main body 300.

In detail, the vacuum cleaner main body 300 is provided with a pair of main wheels 310 allowing the vacuum cleaner main body 300 to be moved, where the main wheels 310 are provided at either side of the vacuum cleaner main body 300. That is, the main wheels 310 include a left wheel and a right wheel. The main wheels 310 separate the undersurface of the vacuum cleaner main body 300 from a floor surface.

Also, an auxiliary wheel 320 is provided on the vacuum cleaner main body 300 to stabilize the vacuum cleaner main body 300.

A hose receiver 302 is formed at the top of the vacuum cleaner main body 300 for receiving the connecting hose 60 inserted therein. A moving member 330 is provided above the hose receiver 302 to seal the hose receiver 302.

The moving member 330 includes a connector 340 formed thereon for the connecting hose 60 to connect to, and the connecting hose 60 passes through the hose connector 340 and is inserted in the hose receiver 302.

In detail, hinges 331 at either side of the moving member 330 enable the pair of main wheels 310 to be rotatably coupled.

Also, a portion of the hose connector 340 protrudes above the moving member 330. Here, the hose connector 340 may be coupled to the moving member 330 or integrally formed with the moving member 330.

Accordingly, through the movement of the suctioning nozzle 30, the connecting hose 60 is moved, and through the movement of the connecting hose 60, the hose connector 340 and the moving member 330 can move forward or rearward with respect to the vacuum cleaner main body 300.

Here, because the moving member 330 is rotatably coupled to the main wheels 310, forward or rearward movement of the hose connector 340 and the moving member 330 with respect to the vacuum cleaner main body 300 signifies that the hose connector 340 and the moving member 330 are slanted at a predetermined angle with respect to a gravitational line.

Also, an angle sensor 350 is provided on the hose connector 340 to sense the tilt of the hose connector 340 or the moving member 330. Of course, the angle sensor 350 may be provided on the moving member 330.

The vacuum cleaner main body 300 is moved in accordance with the tilt sensed by the angle sensor 350. The moving method of the vacuum cleaner main body will be described below.

A description will be provided of the functions of and relations between the connecting hose 60 and the hose connector 340 and the moving member 330.

The connecting hose 60 employs a flexible material that can be freely deformed, so that a user may freely perform cleaning within the deforming parameters of the connecting hose.

Here, because the connecting hose 60 is freely deformable, force from the actual movement of the connecting hose 60 is difficult to relay to the moving member 330. That is, the moving member 330 does not move in accordance with the actual movement of the connecting hose 60.

Accordingly, in the present embodiment, to easily relay the actual movement of the connecting hose 60 to the moving member 330, a hose connector 340 having a predetermined angle is provided on the moving member 330.

In this case, when the connecting hose 60 is moved, the movement of the connecting hose 60 is transferred to the hose connector 340 so that the hose connector 340 moves in concert with the connecting hose 60, and thus, the moving member 330 is moved forward or rearward by means of the movement of the hose connector 340.

The angle sensor 350 senses the tilt of the connecting hose 60, the hose connector 340, and the moving member 330.

Here, to sense the tilt of the hose connector 340 or the moving member 330 with the angle sensor 350, a vertical centerline of the hose connector 340 may be perpendicular to the moving member 330 and may be the same as a gravitational line.

The vertical centerline of the connecting hose 60 connected to the hose connector 340 may be the same as a vertical centerline of the hose connector 340.

In this case, the angle sensed by the angle sensor 350 is the angle of one of the connecting hose 60, the hose connector 340, and the moving member 330. The angle sensor 350 may be installed on the hose connector 340 or the moving member 330 and yield the same sensed angles.

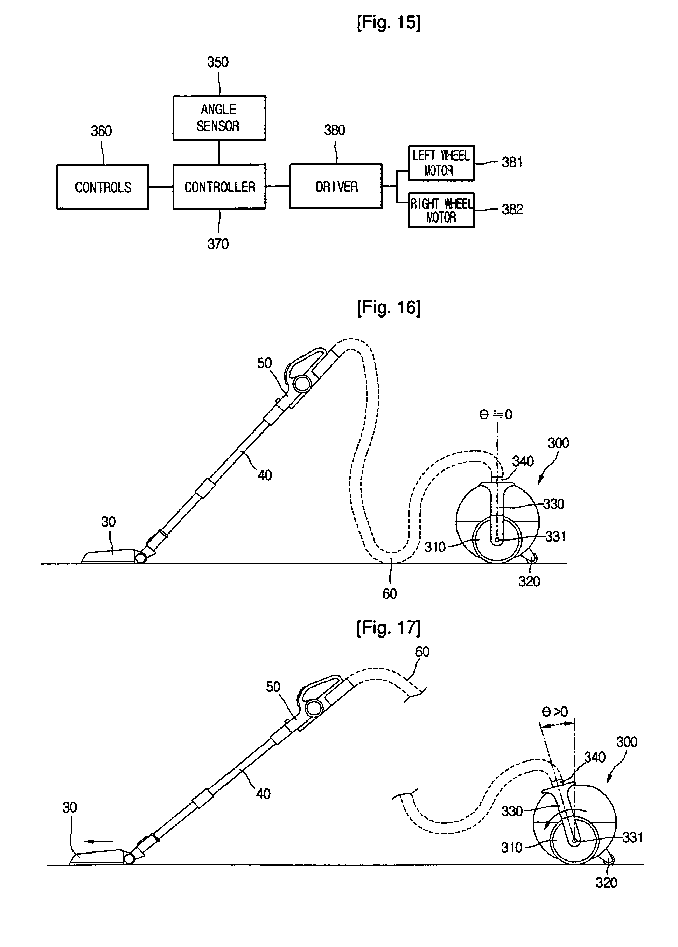

Fig. 15 is a block diagram showing the configuration of a vacuum cleaner according to the third embodiment.

Referring to Fig. 15, a vacuum cleaner according to the present embodiment includes controls 360 for a user to manipulate to control the operation of the vacuum cleaner, an angle sensor 350 for sensing the tilt of a moving member 330, a driving unit 380 that operates according to angles sensed by the angle sensor 350, and a controller 370 for controlling the driving unit 380.

In detail, the driving unit 380 includes a left wheel motor 381 for rotating a left wheel, and a right wheel motor 382 for rotating a right wheel.

The controller 370 controls the operation of the driving unit 380 according to angles sensed by the angle sensor 350.

Here, the controller 370 varies the rotating speeds of each motor according to the angle sensed by the angle sensor 350.

For example, if the sensed angle is large, the controller 370 may rotate the respective motors 381 and 382 quickly, and if the sensed angle is small, the controller 370 may rotate the respective wheels 381 and 382 slowly.

Below, the operation of the vacuum cleaner will be described.

Fig. 16 is a side view showing a vacuum cleaner in a standby state according to the third embodiment.

Referring to Fig. 16, prior to cleaning, the connecting hose 60 is in a relaxed state. Here, due to the weight of the connecting hose 60, the hose connector 340 or the moving member 330 may be tilted at a predetermined angle.

However, such a tilt can be seen to be close to a zero-degree tilt, so that it will fall within the parameters of the disregarded angle. Thus, the respective motors 381 and 382 are not operated, and the vacuum cleaner main body 300 is maintained in a still state.

Fig. 17 is a side view showing a vacuum cleaner operating according to the third embodiment.

Referring to Fig. 17, a user grasps the handle 50 and moves the suctioning nozzle 30 to clean a floor surface. When the user moves the suctioning nozzle 30 forward and rearward to perform cleaning, the repetitive forward and rearward movement results in the suctioning nozzle 30 being moved slightly forward.

In this cleaning process, when the suctioning nozzle 30 is moved forward, the connecting hose 60 is resultantly pulled forward. Then, the forward motion of the connecting hose 60 causes the connector 340 and the moving member 330 to rotate forward with respect to the vacuum cleaner main body 300.

Then, the angle sensor 350 senses the tilt of the hose connector 340 or the moving member 330, and relays the sensed angle to the controller 370.

Then, the controller 370 determines whether the sensed angle is a disregarded angle or a valid angle. (During cleaning, the sensed angle will usually be determined as a valid angle.)

When the sensed angle is determined to be a valid angle, the controller 370 controls the operation of the driving unit 380 to rotate the main wheels 310 so that the vacuum cleaner main body 300 is moved forward. Thus, the vacuum cleaner main body 300 is moved forward.

When the vacuum cleaner main body 300 moves, the connecting hose 60 becomes lax, so that the angle sensed by the angle sensor 350 is reduced. When the angle sensed by the angle sensor 350 falls into the disregarded angle range, the controller 370 stops the operation of the driving unit 380.

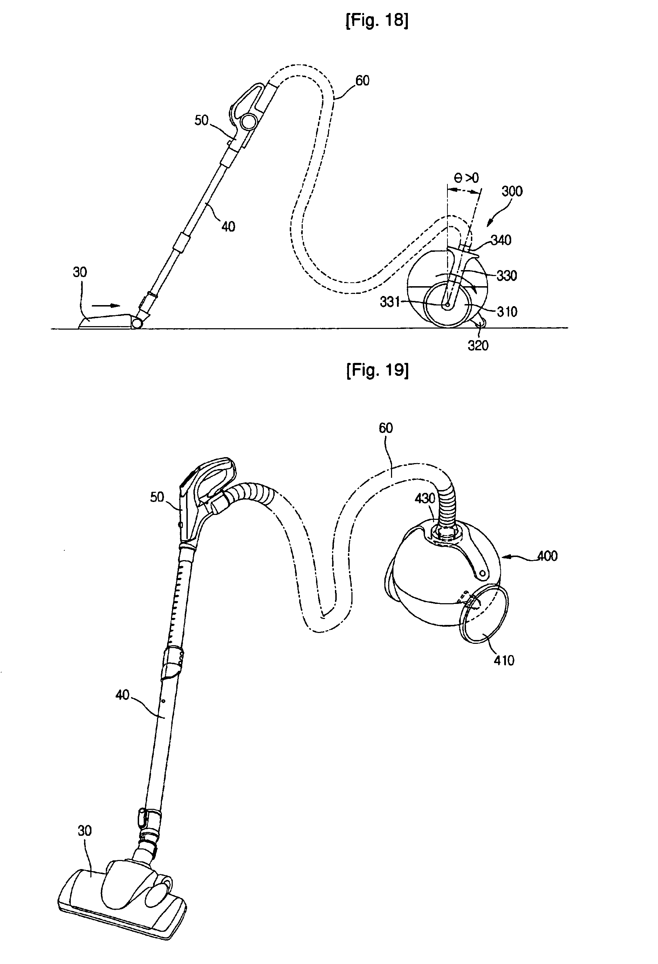

Fig. 18 is a side view showing a vacuum cleaner operating according to the third embodiment.

Referring to Fig. 18, when a user moves the suctioning nozzle 30 rearward, the connecting hose 60 becomes lax, and a pushing force from the connecting hose 60 is imparted on the hose connector 340. Then, the hose connector 340 and the moving member 330 rotate rearward with respect to the vacuum cleaner main body 300.

When the hose connector 340 and the moving member 330 are rotated rearward, the angle sensor 350 senses the tilt of the hose connector 340 or the moving member 330, and relays the sensed angle to the controller 370.

Then, the controller 370 determines whether the sensed angle is a disregarded angle or a valid angle. If the sensed angle is a valid angle, the controller 370 operates the driving unit 380 to rotate the main wheels 310 so that the vacuum cleaner main body 300 is moved rearward. Thus, the vacuum cleaner main body 300 is moved rearward.

When the vacuum cleaner main body 300 moves rearward, the pushing force from the connecting hose 60 on the hose connector 340 is reduced, so that the angle sensed by the angle sensor 350 is reduced. When the angle sensed by the angle sensor 350 falls into the disregarded angle range, the controller 370 stops operation of the driving unit 380.

Fig. 19 is a perspective view of a vacuum cleaner according to a fourth embodiment of the present disclosure.

The present embodiment is the same in all aspects as the third embodiment, except for the position at which the moving member is coupled to the vacuum cleaner main body. Therefore, only characterizing aspects of the present embodiment will be described.

Referring to Fig. 19, a moving member 430 according to the present embodiment is not coupled to the main wheels 410, but is rotatably coupled to the vacuum cleaner main body 400.

When the moving member 430 is thus coupled to the vacuum cleaner main body 400, the moving member 430 being affected and moved by the movement of the main wheels 410 can be prevented.

## Claims

1. A vacuum cleaner comprising:
a vacuum cleaner main body (10; 200; 300; 400);
a wheel (70, 80; 202, 204; 310, 320; 410) enabling movement of the vacuum cleaner main body (10; 200; 300; 400); a driving unit (140; 260; 380) driving the wheel;
a suctioning apparatus (30, 40, 50, 60) through which air suctioned from a surface to be cleaned moves to the vacuum cleaner main body;
a sensor (122a, 122b, 122c; 240; 350) for sensing movement of the suctioning apparatus (30, 40, 50, 60); and
a controller (130; 250; 370) controlling an operation of the driving unit (140; 260; 380) according to data sensed by the sensor (122a, 122b, 122c; 240; 350), **characterized**
**in that** the suctioning apparatus (30, 40, 50, 60) comprises a connector (62; 340) coupled to the vacuum cleaner main body (10; 200; 300; 400), and the sensor (122a, 122b, 122c; 240; 350) senses movement of the connector (62; 340) and
**in that** a moving member (110; 220; 330; 430) is provided on the vacuum cleaner main body (10; 200; 300; 400) and coupled to the connector (62; 340), for moving together with the connector (62; 340) and
**in that** the moving member (110; 220; 330; 430) moves repetitively forward and rearward together with the connector (62; 340).

2. The vacuum cleaner according to claim 1,
wherein when the connector (62; 340) moves in one direction, the controller (130; 250; 370) controls the operation of the driving unit (140; 260; 380) to rotate the wheel to move the vacuum cleaner main body (10; 200; 300; 400) forward, and
when the connector (62; 340) moves in the other direction, the controller (130; 250; 370) controls the operation of the driving unit (140; 260; 380) to rotate the wheel to move the vacuum cleaner main body (10; 200; 300; 400) rearward.

3. The vacuum cleaner according to claim 1,
wherein the vacuum cleaner main body (10, 200; 300; 400) is provided with a guide unit (120; 230) for guiding the movement of the moving member (110; 220; 330; 430).

4. The vacuum cleaner according to claim 1,
wherein the moving member (110; 220; 330; 430) is provided with a magnetic member (114, 123), and the sensor (122a, 122b, 122c; 240; 350) comprises a plurality of sensors for sensing a magnetic field of the magnetic member (114, 123).

## Patentansprüche

1. Staubsauger, der umfasst:
einen Staubsaugerhauptkörper (10; 200; 300; 400);
ein Rad (70, 80; 202, 204; 310, 320; 410), das eine Bewegung des Staubsaugerhauptkörpers (10; 200; 300; 400) ermöglicht; eine Antriebseinheit (140; 260; 380), die das Rad antriebt;
eine Saugvorrichtung (30, 40, 50, 60), durch welche sich Luft, die von einer zu reinigenden Oberfläche angesaugt wird, zu dem Staubsaugerhauptkörper bewegt;
einen Sensor (122a, 122b, 122c; 240; 350), um die Bewegung der Saugvorrichtung (30, 40, 50, 60) zu erkennen; und
eine Steuereinheit (130; 250; 370), die einen Betrieb der Antriebseinheit (140; 260; 380) gemäß den von dem Sensor (122a, 122b, 122c; 240; 350) erfassten Daten steuert,
**dadurch gekennzeichnet,**
**dass** die Saugvorrichtung (30, 40, 50, 60) einen Verbinder (62; 340), der an den Staubsaugerhauptkörper (10; 200; 300; 400) gekoppelt ist, umfasst und dass der Sensor (122a, 122b, 122c; 240; 350) eine Bewegung des Verbinders (62; 340) erfasst, und
**dass** ein Bewegungselement (110; 220; 330; 430) auf dem Staubsaugerhauptkörper (10; 200; 300; 400) vorgesehen ist und an den Verbinder (62; 340) gekoppelt ist, um sich zusammen mit dem Verbinder (62; 340) zu bewegen, und
**dass** sich das Bewegungselement (110; 220; 330; 430) zusammen mit dem Verbinder (62; 340) wiederholt vorwärts und rückwärts bewegt.

2. Staubsauger nach Anspruch 1,
wobei dann, wenn sich der Verbinder (62; 340) in einer Richtung bewegt, die Steuereinheit (130; 250; 370) den Betrieb der Antriebseinheit (140; 260; 380) steuert, um das Rad zu drehen, um den Staubsaugerhauptkörper (10; 200; 300; 400) nach vorne zu bewegen, und
dann, wenn sich der Verbinder (62; 340) in die andere Richtung bewegt, die Steuereinheit (130; 250; 370) den Betrieb der Antriebseinheit (140; 260; 380) steuert, um das Rad zu drehen, um den Staubsaugerhauptkörper (10; 200; 300; 400) nach hinten zu bewegen.

3. Staubsauger nach Anspruch 1,
wobei der Staubsaugerhauptkörper (10; 200; 300; 400) mit einer Führungseinheit (120, 230) versehen ist, um die Bewegung des Bewegungselements (110; 220; 330; 430) zu führen.

4. Staubsauger nach Anspruch 1,
wobei das Bewegungselement (110; 220; 330; 430) mit einem magnetischen Element (114, 123) versehen ist, und wobei der Sensor (122a, 122b, 122c; 240; 350) mehrere Sensoren umfasst, um ein magnetisches Feld des magnetischen Elements (114, 123) zu erkennen.

## Revendications

1. Aspirateur, comprenant :
un corps principal d'aspirateur (10 ; 200 ; 300 ; 400) ;
une roue (70, 80 ; 202, 204 ; 310, 320 ; 410) permettant un mouvement du corps principal d'aspirateur (10 ; 200 ; 300 ; 400) ; une unité d'entraînement (140 ; 260 ; 380) qui entraîne la roue ;
un appareil à succion (30, 40, 50, 60) au moyen duquel l'air aspiré depuis une surface à nettoyer se déplace vers le corps principal d'aspirateur ;
un capteur (122a, 122b, 122c ; 240 ; 350) pour détecter un mouvement de l'appareil à succion (30, 40, 50, 60) ; et
un contrôleur (130 ; 250 ; 360) qui commande un fonctionnement de l'unité d'entraînement (140 ; 260 ; 380) en accord avec des données détectées par le capteur (122a, 122b, 122c ; 240 ; 350),
**caractérisé en ce que**
l'appareil à succion (30, 40, 50, 60) comprend un connecteur (62 ; 340) couplé au corps principal d'aspirateur (10 ; 200 ; 300 ; 400), et le capteur (122a, 122b, 122c ; 240 ; 350) détecte un mouvement du connecteur (62 ; 340) et
**en ce qu'**un élément mobile (110 ; 220 ; 330 ; 430) est prévu sur le corps principal d'aspirateur (10 ; 200 ; 300 ; 400) et couplé au connecteur (62 ; 340), pour se déplacer ensemble avec le connecteur (62 ; 340) et
**en ce que** l'élément mobile (110 ; 220 ; 330 ; 430) est prévu sur le corps principal d'aspirateur (10 ; 200 ; 300 ; 400) et couplé au connecteur (62 ; 340), pour se déplacer ensemble avec le connecteur (62 ; 340) et **en ce que** l'élément mobile (110 ; 220 ; 330 ; 430) se déplace répétitivement vers l'avant et vers l'arrière ensemble avec le connecteur (62 ; 340).

2. Aspirateur selon la revendication 1,
dans lequel quand le connecteur (62 ; 340) se déplace dans une direction, le contrôleur (130 ; 250 ; 370) commande le fonctionnement de l'unité d'entraînement (140 ; 260 ; 380) pour faire tourner la roue et déplacer le corps principal d'aspirateur (10 ; 200 ; 300 ; 400) vers l'avant, et
quand le connecteur (62 ; 340) se déplace dans l'autre direction, le contrôleur (130 ; 250 ; 370) commande le fonctionnement de l'unité d'entraînement (140 ; 260 ; 380) pour faire tourner la roue et déplacer le corps principal d'aspirateur (10 ; 200 ; 300 ; 400) vers l'arrière.

3. Aspirateur selon la revendication 1,
dans lequel le corps principal d'aspirateur (10, 200 ; 300 ; 400) est pourvu d'une unité de guidage (120 ; 230) pour guider le mouvement de l'élément mobile (110 ; 220 ; 330 ; 430).

4. Aspirateur selon la revendication 1,
dans lequel l'élément mobile (110 ; 220 ; 330 ; 430) est pourvu d'un élément magnétique (114, 123), et le capteur (122a, 122b, 122c ; 240 ; 350) comprend une pluralité de capteurs pour détecter un champ magnétique de l'élément magnétique (114, 123).
